# EUROPEAN PATENT APPLICATION

(11) **EP 3 113 546 A1**
(43) Date of publication of application: **04.01.2017**
(21) Application number: 15754562.5
(22) Date of filing: 27.02.2015
(51) Int. Cl.: H04W 48/18, H04W 16/14, H04W 48/16, H04W 72/04

(54) **USER TERMINAL, WIRELESS BASE STATION, AND WIRELESS COMMUNICATION METHOD**

(30) Priority: 28.02.2014 JP 2014039088
(71) Applicant: NTT DOCOMO, INC., Chiyoda-ku Tokyo 100-6150 (JP)
(72) Inventor: HARADA, Hiroki, Tokyo 100-6150 (JP); NAGATA, Satoshi, Tokyo 100-6150 (JP); NAKAMURA, Takehiro, Tokyo 100-6150 (JP); ONOE, Seizo, Tokyo 100-6150 (JP)
(74) Representative: Hoffmann Eitle
(86) International application number: PCT/JP2015/055907
(87) International publication number: WO 2015/129875

(57) **Abstract**

In order that a user terminal properly identifies a connection cell in a radio communication system (LTE-U) for operating LTE in an unlicensed band, a user terminal for communicating with a radio base station in an unlicensed band is provided with a detection section that detects a synchronization signal transmitted from a radio base station using a dummy cell ID used in common among a plurality of radio base stations, an estimation section that performs channel estimation using a reference signal, and a reception processing section that performs reception processing of system information transmitted from a radio base station using a channel estimation result.

## Description

### Technical Field

The present invention relates to a user terminal, radio base station, and radio communication method applicable to the next-generation communication system.

### Background Art

In UMTS (Universal Mobile Telecommunications System) networks, for the purpose of higher data rates, low delay and the like, Long Term Evolution (LTE) has been specified (Non-patent Document 1). In LTE, as multiple access schemes, a scheme based on OFDMA (Orthogonal Frequency Division Multiple Access) is used on downlink, and a scheme based on SC-FDMA (Single Carrier Frequency Division Multiple Access) is used on uplink. Further, for the purpose of wider bands and higher speed than LTE, a successor system (for example, sometimes called LTE Advanced or LTE Enhancement (hereinafter, referred to as "LTE-A")) to LTE has been studied and specified (Rel. 10/11).

In the future radio communication systems (from Rel.12), a system (LTE-U; LTE Unlicensed) has also been studied where the LTE system is operated not only in a frequency band (Licensed band) licensed to a telecommunications carrier (operator) but also in a frequency band (Unlicensed band) without the need of the license. The licensed band is a band that a particular carrier is permitted to exclusively use, and the unlicensed band is a band that is not limited to a particular carrier and that enables a radio base station to be installed. For example, studied are use of 2.4 GHz-band and 5 GHz-band for enabling Wi-Fi and Bluetooth (Registered Trademark) to be used, 60 GHz-band for enabling millimeter-wave radar to be used, and the like.

### Citation List

### Non-Patent Literature

[Non-Patent Literature 1] 3GPP TS 36.300 "Evolved UTRA and Evolved UTRAN Overall description"

### Summary of Invention

### Technical Problem

In addition, in LTE and LTE-A, a physical cell ID (PCI: Physical Cell Identifier) different for each cell and a terminal-specific identifier (USID: UE-Specific Identifier) different for each user terminal are assigned, and using these identifiers, signals (for example, transmission signal, reference signal and the like on physical channels) are generated. Therefore, it is possible to randomize inter-cell interference (inter-cell interference randomization).

Further, in existing LTE, since operation in the licensed band is the premise, a different frequency band is assigned to each operator. However, as distinct from the licensed band, the unlicensed band is not limited to use of only a particular carrier. Therefore, there is a possibility that a frequency band used in LTE-U of some operator overlaps a frequency band used in LTE-U of another operator and Wi-Fi. Further, in the unlicensed band, not limited to an operator, it is considered that a non-operator (for example, individual) installs an LTE-U base station.

In the case of operating LTE in the unlicensed band, it is also conceived that operation is carried out among different operators and non-operator without establishing synchronization, coordination and/or cooperation, etc. In this case, in the unlicensed band, a plurality of operators and the like share the same frequency to use.

Thus, in LTE-U, there is the risk that LTE-U of different operators and non-operator exist in the same frequency band, and that radio base stations (LTE-U base station) with the same physical cell ID (PCI) are disposed nearby. When LTE-U base stations having the same physical cell ID are disposed nearby, it is difficult for a user terminal to efficiency identify the cell.

The present invention was made in view of such a respect, and it is an object of the invention to provide a user terminal, radio base station and radio communication method for enabling a connection cell to be properly identified, in a radio communication system (LTE-U) for operating LTE in an unlicensed band.

### Solution to Problem

One aspect of a user terminal of the present invention is a user terminal for communicating with a radio base station in an unlicensed band, and is characterized by having a detection section that detects a synchronization signal transmitted from a radio base station using a dummy cell ID used in common among a plurality of radio base stations, an estimation section that performs channel estimation using a reference signal, and a reception processing section that performs reception processing of system information transmitted from a radio base station using a channel estimation result.

### Advantageous Effects of Invention

According to the present invention, a user terminal is capable of properly identifying a connection cell in the radio communication system (LTE-U) for operating LTE in an unlicensed band.

### Brief Description of Drawings

FIG. 1 contains diagrams showing one example of operation forms in the case of using LTE in an unlicensed band;
FIG. 2 contains diagrams to explain cell identification operation of a user terminal in the case of applying CA or DC using a licensed band and unlicensed band;
FIG. 3 is a diagram to explain one example of an operation procedure for a user terminal to identify a cell using LTE-U;
FIG. 4 contains diagrams showing one example of allocation patterns of a reference signal in the case where intra-operator LTE-U base stations undergo synchronized operation;
FIG. 5 contains diagrams to explain cell identification operation of a user terminal in the case where an LTE-U base station is operated on a standalone basis in an unlicensed band;
FIG. 6 is a schematic diagram showing one example of a radio communication system according to this Embodiment;
FIG. 7 is an explanatory diagram of an entire configuration of a radio base station according to this Embodiment;
FIG. 8 is an explanatory diagram of a function configuration of the radio base station according to this Embodiment;
FIG. 9 is an explanatory diagram of an entire configuration of a user terminal according to this Embodiment; and
FIG. 10 is an explanatory diagram of a function configuration of the user terminal according to this Embodiment.

### Description of Embodiments

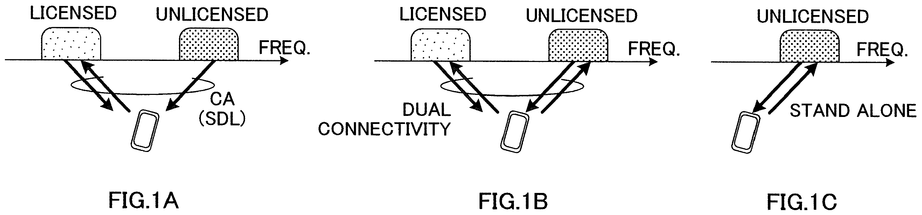

FIG. 1 illustrates operation forms of a radio communication system (LTE-U) applicable in this Embodiment. Specifically, FIG. 1A illustrates an operation form for applying Carrier Aggregation (CA) using a licensed band and an unlicensed band. Further, FIG. 1B illustrates an operation form for applying Dual Connectivity (DC) using a licensed band and an unlicensed band. Furthermore, FIG. 1C illustrates an operation form for applying Standalone using an unlicensed band. In addition, in the following description, a radio base station for operating LTE in an unlicensed band is also described as "LTE-U base station".

Carrier Aggregation (CA) shown in FIG. 1A refers to aggregating a plurality of component carriers (also referred to as CC, carrier, cell and the like) to widen the band. In LTE-A, each CC has a bandwidth with a maximum of 20 MHz, and for example, when a maximum number of 5 CCs are aggregated, a wideband with a maximum of 100 MHz is actualized.

In the case of applying CA, one scheduler (for example, scheduler of a radio base station using a licensed band) controls scheduling of a plurality of CCs. From the foregoing, Carrier Aggregation may also be called intra-base station CA (intra-eNB CA). Further, in FIG. 1A, it is also possible to use the unlicensed band as Supplemental Downlink (SDL). The Supplemental Downlink indicates a carrier (band) used exclusively for DL transmission.

Dual Connectivity (DC) shown in FIG. 1B is the same as CA in the respect of aggregating a plurality of CCs to widen the band. In the case of applying DC, a plurality of schedulers is provided independently, and each of the plurality of schedulers controls scheduling of one or more CCs under control thereof. From the foregoing, DC may also be called inter-base station CA (inter-eNB CA).

In Standalone (autonomous distribution manner) shown in FIG. 1C, a cell (LTE-U base station) using LTE-U in the unlicensed band operates alone. In this case, a user terminal is capable of establishing initial connection with the LTE-U base station. Therefore, in the operation form of Standalone, such a scenario is also conceived that a person (for example, individual) except the operator installs the LTE-U base station (access point).

Further, in the operation forms of CA/DC shown in above-mentioned FIGs. 1A and 1B, it is possible to use a cell of the licensed band as a primary cell (PCell), and use a cell of the unlicensed band as a secondary cell (SCell). Herein, the primary cell (PCell) is a cell that manages RRC connection and handover in performing CA, and is a cell that needs also UL transmission to receive data and feedback signal from a terminal. In the case of performing CA, the primary cell is always set on uplink and downlink. The secondary cell (SCell) is another cell set in addition to the primary cell in applying CA. The secondary cell is capable of being set only on downlink, and is also capable of being set on uplink and downlink at the same time.

In addition, in LTE Rel.10, a physical cell ID (PCI: Physical Cell Identifier) different for each cell is assigned, and signals (for example, transmission signal, reference signal and the like on physical channels) are generated using the PCI. Therefore, it is possible to randomize interference between cells. Herein, the PCI is of 504 different sequences, and is assigned to a cell fixedly.

As described above, as distinct from the licensed band, the unlicensed band is not limited to use of only a particular telecommunications carrier (operator). Generally, it is difficult for different operators to control cell planning (cell arrangement) of the other operator. Further, in the operation form of Standalone, it is also considered that a non-operator (for example, individual) except the operator for providing services in the licensed band installs the LTE-U base station.

Further, when different operators and non-operator install the LTE-U base station, it is also conceived that operation is carried out among a plurality of operators and non-operator without establishing synchronization, coordination and/or cooperation, etc. In such a case, in any one of the operation forms shown in above-mentioned FIGs. 1A to 1C, since LTE-U of a plurality of operators exists in the same frequency band, there is a possibility that LTE-U base stations using the same PCI are disposed nearby.

Thus, in the case where LTE-U base stations having the same physical cell ID are disposed nearby, by a collision of physical cell IDs between operators and the like, it is difficult for a user terminal to efficiently identify the cell (LTE-U base station).

Usually, in the LTE system, a user terminal detects a synchronization signal (PSS/SSS) transmitted from each cell (radio base station), thereby identifies the physical cell ID, and performs demodulation of system information (MIB/SIB), synchronization holding, measurement of received power of a reference signal (RSRP: Reference Signal Received Power) and the like. One example of cell identification operation in existing LTE will be described below.

First, a user terminal detects a synchronization signal (PSS/SSS) transmitted from a radio base station, and identifies the PCI that the radio base station uses from among 504 physical cell IDs (PCIs) specified in LTE. Specifically, the user terminal detects the PSS (Primary Synchronization Signal), and thereby identifies one of three local cell IDs in a cell ID group (168). Further, the terminal detects the SSS (Secondary Synchronization Signal), and thereby identifies one in the cell ID group (168). Thus, using the PSS and SSS, the user terminal identifies the PCI included in the received signal from among 504 physical cell IDs (PCIs).

The user terminal establishes frame timing by detection of the synchronization signal, while detecting the PCI, and then, performs channel estimation using a reference signal (for example, Cell-Specific Reference Signal (CRS)). Successively, using the channel estimation result, the terminal receives system information (MIB/SIB) notified from the radio base station. In addition, the Master Information Block (MIB) is transmitted on a broadcast channel (BCH), and the System Information Block (SIB) is transmitted on a downlink shared channel (DL-SCH).

The user terminal recognizes SIB1 included in the system information, and is thereby capable of identifying an operator ID (PLMN ID: Public Land Mobile Network Identifier) and cell global ID (ECGI: E-UTRAN Cell Global Identifier). In addition, the operator ID is a public land mobile network number determined by a country number and carrier code. The cell global ID is a unique cell number globally determined by an operator ID and cell number in the operator.

In addition, in the unlicensed band, it is not determined how to determine the physical cell ID (PCI) of the LTE-U base station that a non-operator (for example, individual) installs and sets. For example, considered is a method of determining the PCI of LTE-U that an individual installs in shipping, or another method of enabling an individual to set and modify as appropriate. However, in both of the methods, as in the case where a plurality of operators applies LTE-U, there is the possibility that LTE-U base stations with the same PCI are disposed nearby. In such a case, it is the problem that a user terminal identifies (detects) a cell to connect in LTE-U by what operation.

For example, it is considered using the same mechanism as in LTE in the licensed band, and detecting a particular PCI from 504 identifiers based on the synchronization signal (PSS/SSS) transmitted from each cell. However, in LTE-U, as described above, there is the risk that the cells having the same PCI are disposed nearby, and therefore, even when a user terminal detects the PCI using the synchronization signal (PSS/SSS), there is the risk that a plurality of same PCIs is detected.

The inventors of the present invention noted that identification operation for 504 physical cell IDs (PCIs) in a user terminal is not important in LTE-U, and conceived omitting (skipping) identification operation for existing physical cell IDs.

For example, in this Embodiment, instead of existing 504 cell IDs (PCIs), a temporary cell ID (also called a dummy cell ID, dummy PCI, and group PCI) is set, and a plurality of LTE-U base stations uses a common dummy PCI. A user terminal demodulates system information, using timing of a synchronization signal detected using a preamble signal based on the dummy PCI, and a channel response of a reference signal, and thereby acquires PLMN ID (operator ID) and ECGI (cell global ID). In other words, in detecting a synchronization signal transmitted from an LTE-U base station, a user terminal grasps a particular PCI (dummy PCI) in advance, and using the dummy PCI, performs detection operation of the synchronization signal and channel estimation operation using the reference signal.

Thus, by setting a plurality of LTE-U base stations for a common dummy PCI, it is possible to perform cell identification operation of a user terminal by timing detection operation and channel estimation operation based on a single or few preambles. In other words, by using the dummy PCI, since patterns of the synchronization signal (SS) and reference signal (for example, CRS) are limited, it is possible to reduce the load of detecting the synchronization signal and reference signal on the user terminal. By this means, as compared with operation for autonomously detecting existing 504 cell IDs, it is possible to reduce cell identification operation of a user terminal, and to reduce power consumption of the user terminal.

Moreover, as described above, in existing LTE, detection of the synchronization signal in a user terminal is of two-stage configuration with PSS and SSS so as to actualize the search of 504 patterns. In this Embodiment, since search patterns are limited in the user terminal using the dummy PCI, it is made ease also to directly detect a reference signal (for example, CRS).

Further, the inventors of the present invention conceived controlling setting of a cell ID and cell identification operation of a user terminal corresponding to the operation form of LTE-U. For example, as shown in above-mentioned FIGs. 1A and 1B, when operation is performed by CA or DC, a dummy PCI specific to each operator is set, and a user terminal is capable of performing operation of synchronization signal detection and the like using information on the dummy PCI notified from the cell of the licensed band. Further, as shown in above-mentioned FIG. 1C, when an LTE-U base station is operated on a standalone basis, a dummy PCI specific to each operator may be specified, or a common dummy PCI may be specified for the synchronization signals (SS) and reference signals (RS) transmitted from all LTE-U base stations.

Furthermore, the inventors of the invention conceived controlling an allocation position of a reference signal, corresponding to the presence or absence of synchronization between LTE-U base stations of the same operator. For example, when LTE-U base stations in the operator are operated in non-synchronization, a common sequence based on the dummy PCI is used as reference signals transmitted from a plurality of LTE-U base stations, and radio resources to use are also made the same. On the other hand, when LTE-U base stations in the operator undergo synchronized operation, a common sequence based on the dummy PCI is used as reference signals transmitted from a plurality of LTE-U base stations, and radio resources to use are set to enable orthogonality between cells.

This Embodiment will be described below in detail with reference to drawings.

### (Aspect 1)

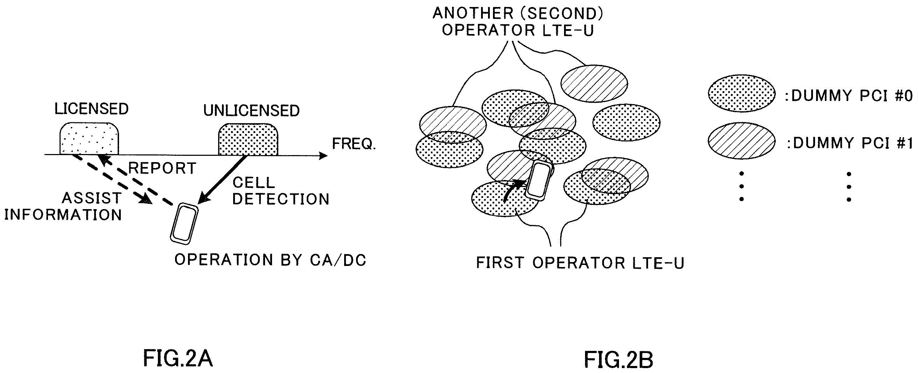

Referring to FIG. 2, Aspect 1 describes one example of setting of a cell ID and cell identification operation of a user terminal in the case of applying CA or DC using a licensed band and unlicensed band.

FIG. 2A illustrates one example in the case of applying CA or DC using a licensed band and unlicensed band. Further, FIG. 2B illustrates cells formed by each operator in the unlicensed band. In addition, FIG. 2B shows the case where each of two operators forms a plurality of cells, but this Embodiment is not limited thereto. For example, it is possible to apply similarly in the case where three or more operators and non-operator (for example, individual) form cells.

In the operation form as shown in FIG. 2A, instead of existing 504 cell IDs (PCIs), a dummy PCI specific to an operator is set, and the common dummy PCI is used among a plurality of LTE-U base stations of the same operator. By setting the dummy PCI specific to the operator, it is possible to suppress collisions of synchronization signals and the like between different operators (non-operators). In addition, it is essential only that the number of dummy PCIs to set is less than "504" (for example, "1", "20", "100" or the like), and it is possible to set independently for each operator.

Further, in the operation form shown in FIG. 2A, when a user terminal detects the cell (LTE-U base station of the unlicensed band, the user terminal is in a state in which the terminal is connected to the licensed band in advance. For example, there is a form where the cell using the licensed band is a primary cell (for example, macrocell), and the cell using the unlicensed band is a secondary cell (for example, small cell).

When the user terminal is connected to the licensed band in advance, the cell (radio base station) using the licensed band is capable of notifying the user terminal of assist information. For example, the cell using the licensed band notifies the user terminal of information on the dummy PCI of the operator own as the assist information. Moreover, as the assist information, the user terminal may be notified of information on timing of the synchronization signal (SS) and timing of resources to transmit the system information, and the like. It is possible to notify the user terminal of the assist information using higher layer signaling (for example, RRC signaling, broadcast signal) and downlink control signal.

Based on the information on the dummy PCI, information on timing of the synchronization signal and the like notified as the assist information, the user terminal is capable of efficiently detecting the synchronization signal. Further, based on timing of the synchronization signal, the user terminal performs channel estimation using a reference signal transmitted from the LTE-U base station. Specifically, using the notified dummy PCI (preamble signal based on the dummy PCI), the user terminal detects the synchronization signal associated with the dummy PCI. Further, based on frame timing established by detection of the synchronization signal, the user terminal receives the reference signal to perform channel estimation.

Further, the user terminal receives the system information using timing of the synchronization signal and channel estimation result, and is thereby capable of acquiring the operator ID (PLMN ID) and cell global ID (ECGI). Furthermore, the user terminal is capable of reporting information on the acquired operator ID (PLMN ID) and/or cell global ID (ECGI) to the serving cell (radio base station of the licensed band).

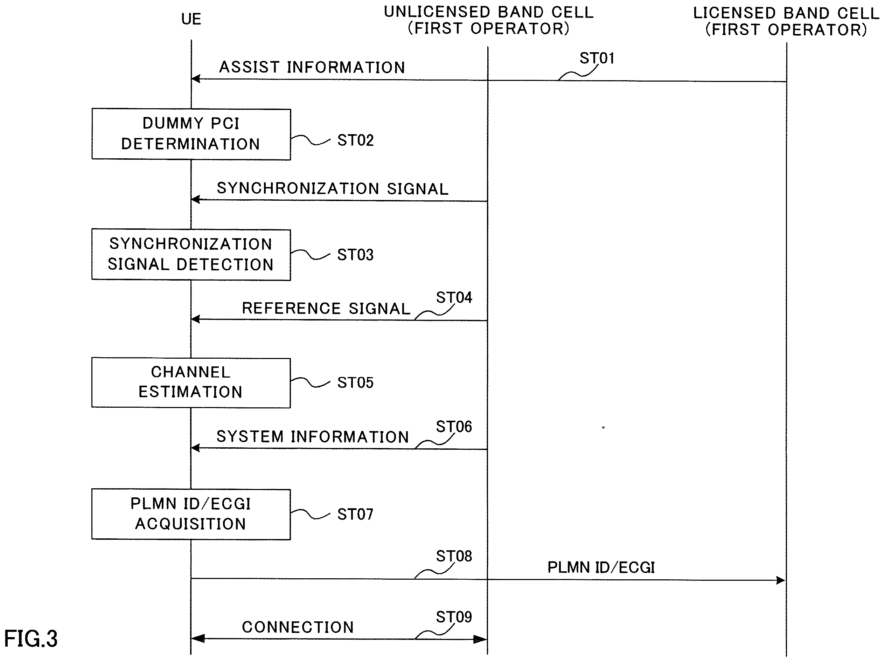

Operation for a user terminal to identify a cell using LTE-U will be described below with reference to FIGs. 2B and 3. Herein, the case is assumed that the dummy PCI is set individually for each operator. Further, the number of dummy PCIs is set at least to be lower than "504". FIG. 2B shows the case where a first operator providing services to a user terminal uses a dummy PCI #0, and another operator (second operator) uses a different dummy PCI #1.

First, the user terminal receives assist information notified from the cell of the first operator using a licensed band (ST01). Successively, based on information on a dummy PCI included in the assist information, the user terminal determines the dummy PCI corresponding to the first operator (ST02). Next, using the dummy PCI (preamble signal based on the dummy PCI), the user terminal detects a synchronization signal transmitted from the cell of the first operator using an unlicensed band (ST03).

Successively, the terminal receives a reference signal based on timing of the detected synchronization signal (ST04), and performs channel estimation using the received reference signal (ST05). As the reference signal transmitted from the radio base station, for example, it is possible to use CRS, CSI-RS in LTE, new reference signal or the like. Next, the terminal receives system information transmitted from the cell (radio base station) using the unlicensed band, using the channel estimation result (ST06), and demodulates the received system information. The system information includes MIB and SIB in LTE.

Successively, the user terminal acquires an operator ID (PLMN ID) and cell global ID (ECGI) of the cell (radio base station) of the unlicensed band from the demodulated system information (ST07). The terminal may report the acquired cell global ID to the cell (radio base station) of the licensed band (ST08). Subsequently, based on the acquired cell global ID and the like, the user terminal performs connection operation for the available radio base station (LTE-U base station), and connects to the LTE-U base station (ST09).

Thus, in this Embodiment, based on the dummy PCI specific to the operator, the user terminal performs detection of the synchronization signal and channel estimation operation to acquire the system information. By using the dummy PCI, since patterns of the synchronization signal (SS) and reference signal (for example, CRS) are limited, it is possible to reduce the load of detecting the synchronization signal and reference signal on the user terminal. Accordingly, in this Embodiment, as compared with existing operation for autonomously searching existing 504 cell IDs to identify a cell, it is possible to simplify cell identification operation, and to reduce power consumption. Further, by setting different dummy PCIs among a plurality of operators/non-operators to use in generation of the synchronization signal the reference signal, it is possible to suppress collisions of transmission signals among a plurality of operators/non-operators using the same frequency.

Further, in existing LTE, detection of the synchronization signal in the user terminal is of two-stage configuration with PSS and SSS so as to actualize the search of 504 patterns, and in this Embodiment, it is possible to limit search patterns in a user terminal by using the dummy PCI. By this means, it is made ease also that the user terminal directly detects a reference signal (for example, CRS). Particularly, as described above, when the user terminal receives the assist information from the radio base station of the licensed band, it is possible to effectively reduce the load of detecting the synchronization signal and reference signal.

In addition, as the dummy PCI, it is possible to specify a number of particular PCIs less than 504 for the LTE-U signal in specifications. Alternatively, using the same mechanism as in the virtual cell ID in LTE-A, it may be configured that the radio base station notifies the user terminal using higher layer signaling (for example, RRC signaling). In this case, the synchronization signal (SS) and reference signal (for example, CRS) are generated based on the dummy PCI.

### <Modification>

In the case of applying CA by a licensed band and unlicensed band, it may be made possible that a radio base station of the licensed band notifies a user terminal of timing of system information transmitted from an LTE-U base station of the unlicensed band. When timing of the system information notified from the radio base station of the licensed band coincides with timing at least on the frame number level, the user terminal is capable of specifying subframes and symbols in which is included the system information, using the CRS transmitted from the LTE-U base station.

In this case, without using the synchronization signal transmitted from the LTE-U base station, the user terminal is capable of performing timing detection using the reference signal (for example, CRS). As a result, it is possible to eliminate (omit) the need for transmission of the synchronization signal from the LTE-U base station using the unlicensed band. By this means, it is possible to more efficiently perform cell identification operation of the user terminal in the unlicensed band.

### (Aspect 2)

Aspect 2 describes the case of controlling allocation positions of the reference signal corresponding to the presence or absence of synchronized operation among a plurality of LTE-U base stations in the same operator, in the case of applying CA or DC using a licensed band and unlicensed band.

### <Non-synchronized operation among intra-operator LTE-U base stations>

In the case of setting a dummy PCI in common among LTE-U base stations in the operator, as the synchronization signal (SS) and reference signal (for example, CRS), sequences based on the dummy PCI are transmitted, and therefore, are common patterns in the operator. When a plurality of LTE-U base stations in the same operator undergoes non-synchronized operation, the synchronization signal and reference signal of each LTE-U base station are common patterns, but since transmission timing of each LTE-U base station is different, it is possible to avoid a collision of transmission signals.

In this case, since the user terminal is capable of performing each of detection of the synchronization signal and channel estimation of each LTE-U base station at different timing, and is thereby capable of discovering and measuring a plurality of surrounding LTE-U base stations. Further, in this case, when some LTE-U base station in the same operator transmits data, the other LTE-U base stations may be controlled to halt transmission of the reference signal (for example, CRS) in resources to which the data is allocated.

Thus, when a plurality of LTE-U base stations in the same operator undergoes non-synchronized operation, by performing each of detection of the synchronization signal and/or channel estimation of each LTE-U base station using the reference signal of the same allocation pattern, it is possible to discover a plurality of LTE-U base stations.

### <Synchronized operation among intra-operator LTE-U base stations >

As described above, in the case of setting a dummy PCI in common among LTE-U base stations in the operator, as the synchronization signal (SS) and reference signal (for example, CRS), sequences based on the dummy PCI are transmitted, and therefore, are common patterns in the operator. Hence, when a plurality of LTE-U base stations in the same operator undergoes synchronized operation, there is the risk that transmission signals between LTE-U base stations collide.

In this case, the user terminal is capable of discovering common timing (reception timing of the synchronization signal and reference signal) among LTE-U base stations in the operator. However, even when the user terminal performs channel estimation using the reference signal of each of the LTE-U base stations respectively, the channel estimation result is high in only the LTE-U base station (nearest) with the highest reception intensity. As a result, demodulation of system information using the channel estimation result also provides a high probability that only the LTE-U base station with the highest reception intensity succeeds, and it is difficult to discover and measure a plurality of base stations.

Therefore, in this Embodiment, in the case of performing synchronized operation on LTE-U base stations in the same operator, each of the LTE-U base stations uses a reference signal capable of being allocated orthogonally among a plurality of LTE-U base stations to demodulate system information. In other words, each of the LTE-U base stations transmits the reference signal capable of being orthogonal in radio resources (time frequency resources) as a reference signal for system information demodulation.

The user terminal performs channel estimation of each of radio base stations using the reference signal capable of being orthogonal among different LTE-U base stations. By this means, also in the case of performing synchronized operation on LTE-U base stations, it is possible to discover and measure a plurality of LTE-U base stations.

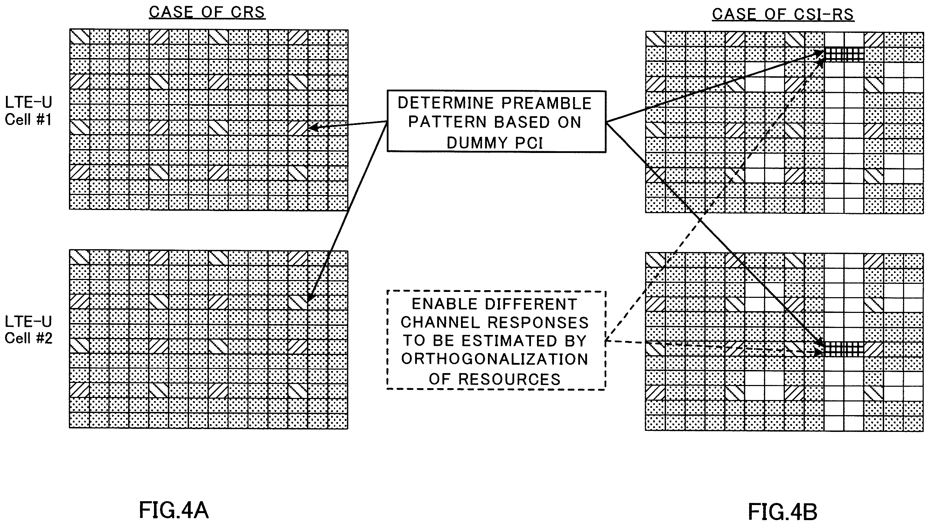

The allocation of reference signals in the case where a plurality of LTE-U base stations undergoes synchronized operation will be described below with reference to FIG. 4. FIG. 4A illustrates the reference signal (for example, CRS) allocated in the same resource among a plurality of LTE-U base stations of the same operator, and FIG. 4B illustrates the reference signal (for example, CRI-RS) capable of being allocated in different resources among the LTE-U base stations. Further, FIG. 4 shows the case of transmitting with two layers, but this Embodiment is not limited thereto.

In the case as shown in FIG. 4A, a first LTE-U base station (Cell #) and second LTE-U base station (Cell #2) in the same operator generate CRSs of the same pattern based on the same dummy PCI, and are synchronized also in transmission timing. Therefore, the CRS transmitted from the first LTE-U base station collides with the CRS transmitted from the second LTE-U base station. As a result, it is difficult for a user terminal to discover and measure both of the first LTE-U base station and the second LTE-U base station.

On the other hand, in the case as shown in FIG. 4B, as the CSI-RS transmitted from the first LTE-U base station and the CSI-RS transmitted from the second LTE-U base station, a common sequence based on the dummy PCI is transmitted, and resources to use in transmission are controlled to enable orthogonality between cells. Herein, the case is shown where as a resource to use in transmission of CSI-RS, a maximum number of 20 patterns (configuration patterns) are set and used among a plurality of LTE-U base stations.

In the case as shown in FIG. 4B, a user terminal measures power (received power) of a sequence based on the dummy PCI for each of 20 CSI-RS patterns. Then, the user terminal performs channel estimation using a pattern that the existence of the reference signal is detected, and is thereby capable of properly demodulating system information of each LTE-U base station. Further, the radio base station of the licensed band is capable of notifying the user terminal of information on the pattern (configuration pattern) of the CSI-RS by higher layer signaling and the like.

In addition, FIG. 4B shows the case of using the CSI-RS as the reference signal to vary the allocation position, but the reference signal is not limited thereto. For example, it is also possible to use a frequency shift pattern of a sequence such as CRS and PRS to allocate.

Thus, also in the case where a plurality of LTE-U base stations in the same operator undergoes synchronized operation, each LTE-U base station transmits a reference signal capable of being allocated orthogonally among a plurality of LTE-U base stations, and the user terminal is thereby capable of discover and measure a plurality of LTE-U base stations.

### (Aspect 3)

Aspect 3 describes one example of setting of a cell ID and cell identification operation of a user terminal in the case where a radio base station using an unlicensed band is operated on a standalone basis.

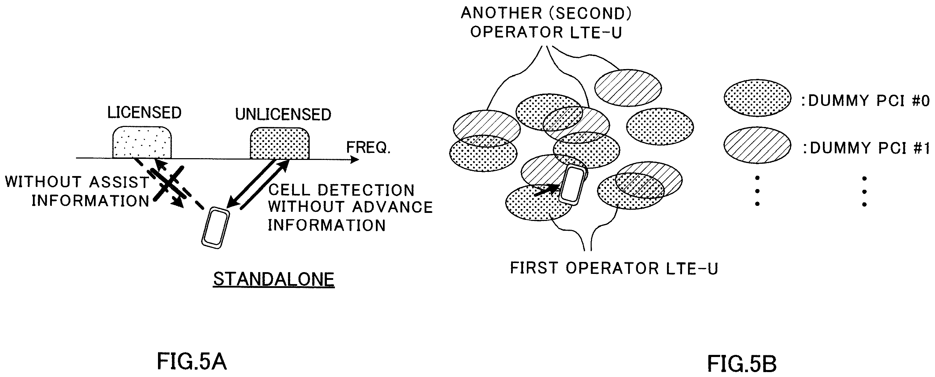

FIG. 5A shows one example of the case where an LTE-U base station is operated on a standalone basis. In this case, a user terminal needs to perform cell identification operation (initial connection to the LTE-U base station), without using assist information (advance information such as the dummy PCI and the like) from a cell using a licensed band.

Therefore, in the case where a radio base station using an unlicensed band is operated on a standalone basis, a user terminal detects a synchronization signal using a beforehand defined dummy PCI. For example, as the dummy PCI, a number of particular PCIs (for example, "1", "20", "100" or the like) less than 504 are beforehand defined in specifications. At this point, it is possible to define the specific dummy PCI (specific to the operator) for each operator. In addition, for an LTE-U base station of a non-operator (for example, individual), by assuming that the non-operator is a single operator, the dummy PCI is defined.

Alternatively, a common dummy PCI (for example, a single dummy PCI) may be defined for all LTE-U base stations using an unlicensed band irrespective of operators. In this case, each LTE-U base station transmits a synchronization signal and/or reference signal generated using the common dummy PCI.

Next, cell identification operation of a user terminal will be described with reference to FIG. 5B. Herein, the case is assumed that dummy PCIs (less than 504) are beforehand specified individually for each operator. FIG. 5B shows the case where a first operator providing services to a user terminal uses a dummy PCI #0, and another operator (second operator) uses a dummy PCI #1.

First, the user terminal detects a synchronization signal transmitted from a cell using an unlicensed band, using the beforehand defined dummy PCI (preamble signal based on the dummy PCI). For example, when the dummy PCI #0 is defined for the user terminal, the user terminal detects the synchronization signal transmitted from the cell (LTE-U base station) of the first operator. When a plurality of dummy PCIs is defined, the user terminal attempts to detect the synchronization signal using each of the dummy PCIs.

Next, based on timing of the detected synchronization signal, the user terminal performs channel estimation using a reference signal transmitted from the LTE-U base station. As the reference signal transmitted from the LTE-U base station, for example, it is possible to use CRS, CSI-RS in LTE, new reference signal or the like. Successively, using the channel estimation result, the user terminal receives system information transmitted from the LTE-U base station to demodulate. The system information includes MIB and SIB in LTE.

Next, the user terminal acquires an operator ID (PLMN ID) and cell global ID (ECGI) of the cell (LTE-U base station) of the unlicensed band from the demodulated system information. Subsequently, based on the acquired global cell ID and the like, the terminal performs connection operation for the available radio base station (LTE-U base station), and connects to the LTE-U base station.

Thus, in this Embodiment, the user terminal performs detection of the synchronization signal and channel estimation operation based on the dummy PCI specific to the operator, and is capable of acquiring the system information. By this means, as compared with operation for autonomously searching existing 504 cell IDs to identify a cell, it is possible to simplify cell identification operation, and to reduce power consumption. Further, by setting dummy PCIs specific to operators to use in generation of the synchronization signal and the reference signal, it is possible to suppress collisions of transmission signals among a plurality of operators/non-operators using the same frequency.

In addition, also in Aspect 3, it is possible to apply the method (above-mentioned Aspect 2) of controlling the allocation position of the reference signal corresponding to the presence or absence of synchronized operation of a plurality of LTE-U base stations in the same operator.

### (Configuration of a radio communication system)

A configuration of a radio communication system according to this Embodiment will be described below. In the radio communication system, radio communication methods according to the above-mentioned Aspects 1 to 3 are applied. In addition, the radio communication methods according to the above-mentioned Aspects 1 to 3 may be applied alone, or may be applied in combination.

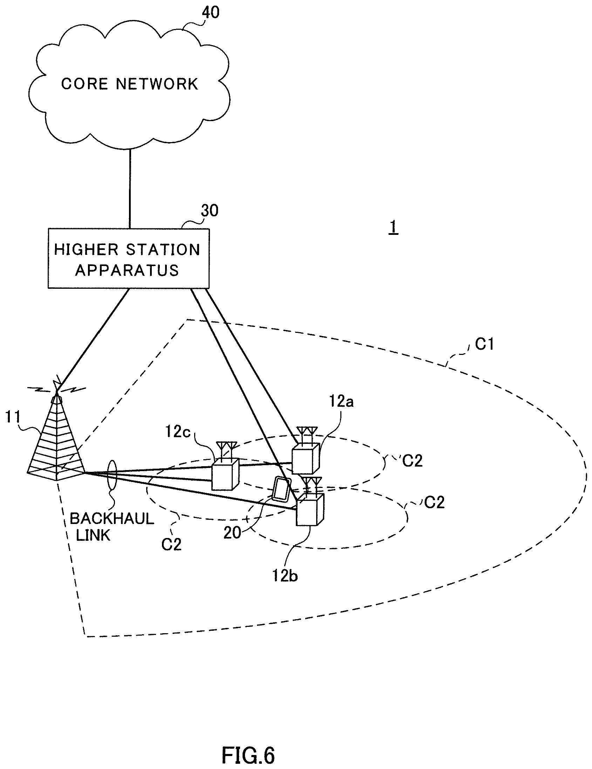

FIG. 6 is a schematic configuration diagram of the radio communication system according to this Embodiment. In addition, for example, the radio communication system as shown in FIG. 6 is a system including an LTE system or SUPER 3G. In the radio communication system, it is possible to apply Carrier Aggregation (CA) to aggregate a plurality of base frequency blocks (component carriers) with a system bandwidth of the LTE system as one unit, Dual Connectivity (DC) or Standalone. Further, the radio communication system as shown in FIG. 6 has unlicensed bands (LTE-U base stations). In addition, the radio communication system may be called IMT-Advanced, or may be called 4G or FRA (Future Radio Access).

The radio communication system 1 as shown in FIG. 6 is provided with a radio base station 11 for forming a macrocell C1, and radio base stations 12a to 12c (hereinafter, described as 12) for forming small cells C2 smaller than the macrocell C1. Further, a user terminal 20 is disposed in the macrocell C1 and each of the small cells C2. For example, it is assumed to adopt a form where the macrocell C1 is used in a licensed band, and the small cell C2 is used in an unlicensed band (LTE-U).

The user terminal 20 is capable of connecting to both of the radio base station 11 and the radio base station 12. In this case, it is conceived that the user terminal 20 concurrently uses the macrocell C1 and small cell C2 using different frequencies by CA or DC. In this case, the radio base station 11 is capable of transmitting assist information on the radio base station 12 (LTE-U base station) to the user terminal 20. Further, when the LTE-U base station (for example, radio base station 12) is operated on a standalone basis, the user terminal performs initial connection to the LTE-U base station.

The user terminal 20 and radio base station 11 are capable of communicating with each other using carriers (called the existing carrier, Legacy carrier and the like) with a narrow bandwidth in a relatively low frequency band (for example, 2 GHz). On the other hand, the user terminal 20 and radio base station 12 may use carriers with a wide bandwidth in a relatively high frequency band (for example, 3.5 GHz and the like), or may use the same carrier as in the radio base station 11. It is possible to configure that the radio base station 11 and radio base station 12 (or radio base stations 12) undergo wired connection (Optical fiber, X2 interface and the like), or wireless connection.

The radio base station 11 and each of the radio base stations 12 are relatively connected to a higher station apparatus 30, and is connected to a core network 40 via the higher station apparatus 30. In addition, for example, the higher station apparatus 30 includes an access gateway apparatus, Radio Network Controller (RNC), Mobility Management Entity (MME) and the like, but is not limited thereto. Further, each of the radio base stations 12 may be connected to the higher station apparatus 30 via the radio base station 11.

In addition, the radio base station 11 is a radio base station having relatively wide coverage, and may be called eNodeB (eNB), macro base station, transmission point and the like. Further, the small base station 12 is a radio base station having local coverage, and may be called a small base station, pico-base station, femto-base station, Home eNodeB, RRH (Remote Radio Head), micro-base station, transmission point, and the like. Hereinafter, in the case of not distinguishing between the radio base stations 11 and 12, the stations are collectively called a radio base station 10. Each user terminal 20 is a terminal supporting various types of communication schemes such as LTE and LTE-A, and may include a fixed communication terminal as well as the mobile communication terminal.

In the radio communication system, as radio access schemes, OFDMA (Orthogonal Frequency Division Multiple Access) is applied on downlink, and SC-FDMA (Single Carrier-Frequency Division Multiple Access) is applied on uplink. OFDMA is a multicarrier transmission scheme for dividing a frequency band into a plurality of narrow frequency bands (subcarriers), and mapping data to each subcarrier to perform communication. SC-FDMA is a single-carrier transmission scheme for dividing a system bandwidth into bands comprised of a single or contiguous blocks for each terminal so that a plurality of terminals uses mutually different bands, and thereby reducing interference among terminals.

Herein, communication channels used in the radio communication system as shown in FIG. 6 are described. Communication channels on downlink include PDSCH (Physical Downlink Shared Channel) shared by user terminals 20, and downlink L1/L2 control channels (PDCCH, PCFICH, PHICH and Enhanced PDCCH). User data and higher control information is transmitted on the PDSCH. Scheduling information of the PDSCH and PUSCH and the like is transmitted on the PDCCH (Physical Downlink Control Channel). The number of OFDM symbols used in the PDCCH is transmitted on the PCFICH (Physical Control Format Indicator Channel). ACK/NACK of HARQ for the PUSCH is transmitted on the PHICH (Physical Hybrid-ARQ Indicator Channel). Further, scheduling information of the PDSCH and PUSCH and the like may be transmitted on the Enhanced PDCCH (EPDCCH). The EPDCCH is frequency division multiplexed with the PDSCH (downlink shared data channel).

Communication channels on uplink include PUSCH (Physical Uplink Shared Channel) as an uplink data channel shared by user terminals 20 and PUCCH (Physical Uplink Control Channel) that is a control channel on uplink. User data and higher control information is transmitted on the PUSCH. Further, radio quality information (CQI) of downlink, receipt conformation signal (ACK/NACK) and the like are transmitted on the PUCCH.

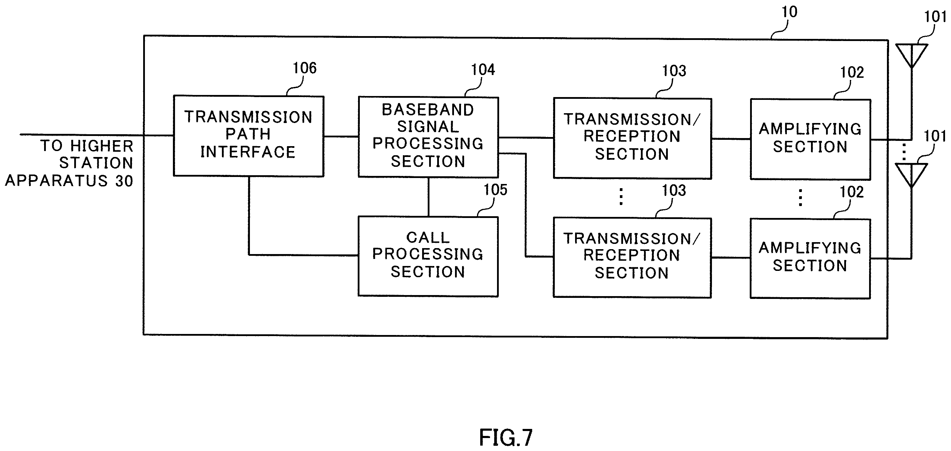

FIG. 7 is an entire configuration diagram of the radio base station 10 (including the radio base stations 11 and 12) according to this Embodiment. The radio base station 10 is provided with a plurality of transmission/reception antennas 101 for MIMO transmission, amplifying sections 102, transmission/reception sections 103, baseband signal processing section 104, call processing section 105, and transmission path interface 106.

User data to transmit to the user terminal 20 from the radio base station 10 on downlink is input to the baseband signal processing section 104 from the higher station apparatus 30 via the transmission path interface 106.

The baseband signal processing section 104 performs, on the input user data, processing of PDCP layer, segmentation and concatenation of the user data, transmission processing of RLC (Radio Link Control) layer such as transmission processing of RLC retransmission control, MAC (Medium Access Control) retransmission control, for example, transmission processing of HARQ, scheduling, transmission format selection, channel coding, Inverse Fast Fourier Transform (IFFT) processing, and precoding processing to transfer to each of the transmission/reception sections 103. Further, also concerning a signal of the downlink control channel, the section 104 performs transmission processing such as channel coding and Inverse Fast Fourier Transform on the signal to transfer to each of the transmission/reception sections 103.

Further, the baseband signal processing section 104 notifies the user terminal 20 of control information (system information) for communications in the cell, using higher layer signaling (for example, RRC signaling, broadcast information and the like). For example, the information for communications in the cell includes the system bandwidth on uplink or downlink and the like.

Further, in order that the user terminal identifies (detects) the cell (LTE-U base station) of the unlicensed band, the radio base station (for example, radio base station 11) of the licensed band may transmit assist information to the user terminal using higher layer signaling and the like. As the assist information, there is information on the dummy PCI of the operator own, and information on timing of the synchronization signal (SS) transmitted from the LTE-U base station and timing of resources to transmit the system information. Further, the assist information may include information on information (for example, allocation pattern of CSI-RS) about the pattern of the reference signal transmitted from the LTE-U base station.

Each of the transmission/reception sections 103 converts the baseband signal, which is subjected to precoding for each antenna and is output from the baseband signal processing 104, into a signal with a radio frequency band. The amplifying sections 102 amplify the radio-frequency signal subjected to frequency conversion, and transmit from the transmission/reception antennas 101.

On the other hand, for data transmitted from the user terminal 20 to the radio base station 10 on uplink, a radio-frequency signal received in each of the transmission/reception antennas 101 is amplified in respective one of the amplifying sections 102, is subjected to frequency conversion in respective one of the transmission/reception sections 103 and is thereby converted into a baseband signal, and the signal is input to the baseband signal processing section 104.

For user data included in the input baseband signal, the baseband signal processing section 104 performs FFT processing, IDFT processing, error correcting decoding, reception processing of MAC retransmission control, and reception processing of RLC layer and PDCP layer to transfer to the higher station apparatus 30 via the transmission path interface 106. The call processing section 105 performs call processing such as setting and release of a communication channel, state management of the radio base station 10, and management of radio resources.

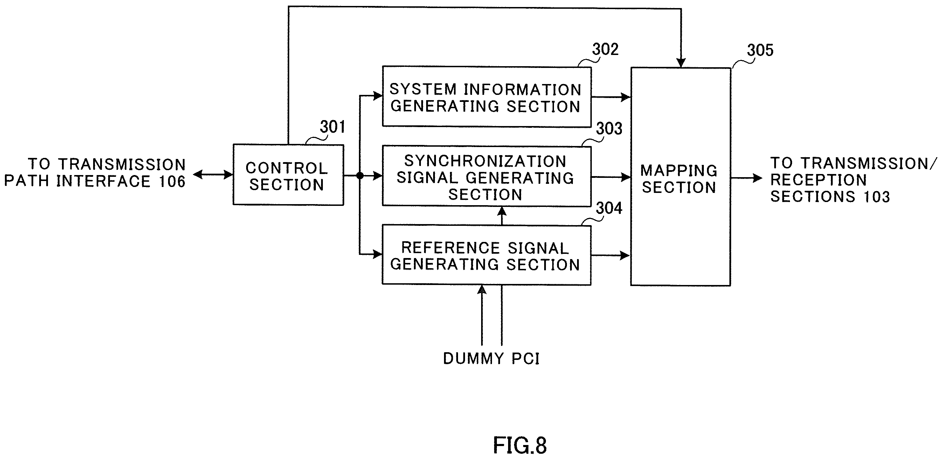

FIG. 8 is a principal function configuration diagram of the baseband signal processing section 104 that the radio base station 10 (for example, LTE-U base station using the unlicensed band) has according to this Embodiment. In addition, FIG. 8 mainly illustrates function blocks of a characteristic portion in this Embodiment, and it is assumed that the radio base station 10 has other function blocks required for radio communications.

As shown in FIG. 8, the radio base station 10 has a control section 301 (scheduler), system information generating section 302, synchronization signal generating section 303, reference signal generating section 304, and mapping section 305.

The control section 301 controls scheduling of a downlink data signal transmitted on the PDSCH and downlink control signal transmitted on the PDCCH and/or Enhanced PDCCH (EPDCCH). Further, the section also performs control of scheduling of the system information, synchronization signal, downlink control signals such as CRS and CSI-RS and the like.

The system information generating section 302 generates the system information (for example, MIB, SIB) to notify the user terminal. The MIB generated in the system information generating section 302 is transmitted using the broadcast channel, and the SIB is transmitted using the downlink shared channel. Further, the system information generating section 302 is capable of including information on the operator ID (PLMN ID) and/or cell global ID (ECGI) in the SIB (for example, SIB1).

The synchronization signal generating section 303 generates a synchronization signal. It is possible to generate the synchronization signal based on the dummy PCI used in the radio base station. In addition, the dummy PCI is a cell ID set for a plurality of LTE-U base stations in common. Therefore, synchronization signals transmitted from LTE-U base stations using the common dummy PCI are of the same pattern.

The reference signal generating section 304 generates a downlink reference signal. It is possible to generate the reference signal based on the dummy PCI used in the radio base station. Therefore, LTE-U base stations using the common dummy PCI transmit reference signals having a common sequence based on the dummy PCI. In addition, the reference signal generating section 304 may apply the dummy PCI to an existing reference signal (for example, CRS, CSI-RS or DM-RS to generate the reference signal, or may generate a new reference signal.

Based on instructions from the control section 301 and the like, the mapping section 305 (assignment control section) controls the assignment of downlink signals generated in the system information generating section 302, synchronization signal generating section 303, and reference signal generating section 304 to radio resources. As shown in the above-mentioned Aspect 2, the mapping section 305 is capable of controlling the allocation position of the reference signal corresponding to the presence or absence of synchronized operation among a plurality of LTE-U base stations in the same operator.

When the LTE-U base stations in the operator are operated in non-synchronization, as reference signals transmitted from a plurality of LTE-U base stations, the mapping section 305 uses the common sequence based on the dummy PCI, and also makes radio resources to use the same. On the other hand, when the LTE-U base stations in the operator undergo synchronized operation, as reference signals transmitted from a plurality of LTE-U base stations, the mapping section 305 uses the common sequence based on the dummy PCI, and controls to enable radio resources to use to be orthogonal among cells.

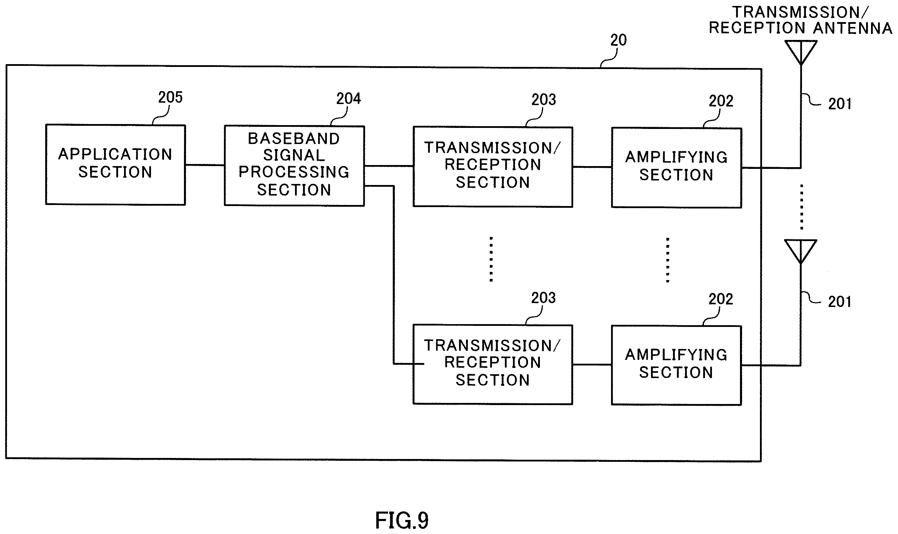

FIG. 9 is an entire configuration diagram of the user terminal 20 according to this Embodiment. The user terminal 20 is provided with a plurality of transmission/reception antennas 201 for MIMO transmission, amplifying sections 202, transmission/reception sections (reception section) 203, baseband signal processing section 204, and application section 205.

For downlink data, radio-frequency signals received in a plurality of transmission/reception antennas 201 are respectively amplified in the amplifying sections 202, and are subjected to frequency conversion in the transmission/reception sections 203 to be baseband signals. The baseband signal is subjected to FFT processing, error correcting decoding, reception processing of retransmission control (HARQ-ACK) and the like in the baseband signal processing section 204. Among the downlink data, downlink user data is transferred to the application section 205. The application section 205 performs processing concerning layers higher than physical layer and MAC layer, and the like. Further, among the downlink data, broadcast information is also transferred to the application section 205.

On the other hand, for uplink user data, the data is input to the baseband signal processing section 204 from the application section 205. The baseband signal processing section 204 performs transmission processing of retransmission control (HARQ-ACK), channel coding, precoding, DFT processing, IFFT processing and the like to transfer to each of the transmission/reception sections 203. Each of the transmission/reception sections 203 converts the baseband signal output from the baseband signal processing section 204 into a signal with a radio frequency band. Subsequently, each of the amplifying sections 202 amplifies the radio-frequency signal subjected to frequency conversion to transmit from respective one of the transmission/reception antennas 201.

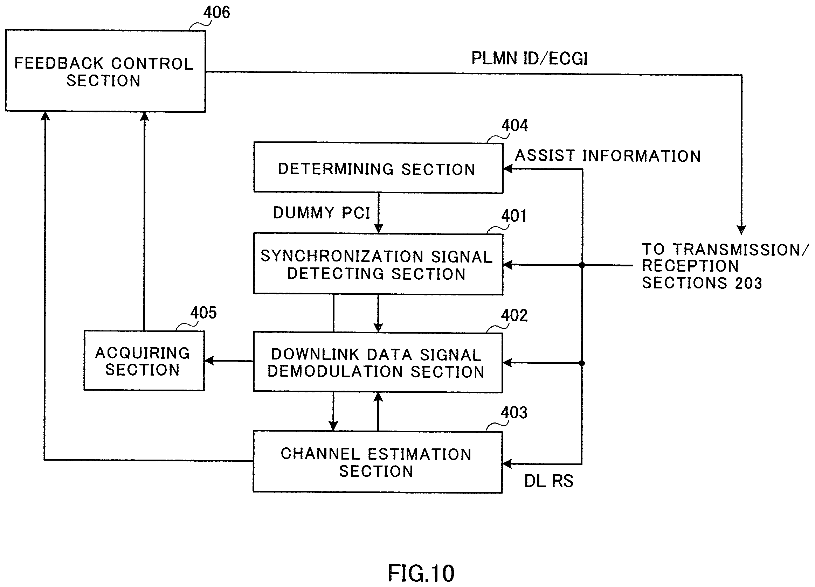

FIG. 10 is a principal function configuration diagram of the baseband signal processing section 204 that the user terminal 20 has. In addition, FIG. 10 mainly illustrates function blocks of a characteristic portion in this Embodiment, and it is assumed that the user terminal 20 has other function blocks required for radio communications.

As shown in FIG. 10, the baseband signal processing section 204, which the user terminal 20 has, has a synchronization signal detecting section 401, downlink data signal demodulation section 402, channel estimation section 403, determining section 404, acquiring section 405 and feedback control section 406.

The synchronization signal detecting section 401 detects a synchronization signal transmitted from the radio base station. For example, in the licensed band, using the synchronization signal (PSS/SSS) transmitted from the radio base station, the section detects a particular PCI from among 504 PCIs. On the other hand, in the unlicensed band, using the dummy PCI (preamble signal based on the dummy PCI) used among a plurality of base stations in common, the section detects a synchronization signal transmitted from the LTE-U base station. In addition, a configuration may be made where a synchronization signal detecting section for the licensed band and a synchronization signal detecting section for the unlicensed band are provided separately.

Based on timing of the synchronization signal detected in the synchronization signal detecting section 401, the channel estimation section 403 performs channel estimation using a reference signal transmitted from the LTE-U base station. Further, in the case where a plurality of LTE-U base stations in the same operator undergoes non-synchronized operation, using the reference signal allocated in the same position in radio resources, the channel estimation section 403 performs channel estimation of each of the LTE-U base stations respectively.

On the other hand, in the case where a plurality of LTE-U base stations in the same operator undergoes synchronized operation, using the reference signal allocated to be capable of being orthogonal among different LTE-U base stations in radio resources, the channel estimation section 403 performs channel estimation of each of the LTE-U base stations respectively. For example, in the case as shown in above-mentioned FIG. 4B, when the CSI-RS of the first LTE-U base station and the CSI-RS of the second LTE-U base station in the same operator are made orthogonal, the channel estimation section 403 measures power (received power) of a sequence based on the dummy PCI, for each CSI-RS pattern.

Using the channel estimation result, the downlink data signal demodulation section 402 demodulates the downlink data signal such as the system information transmitted from the cell (LTE-U base station) using the unlicensed band. The acquiring section 405 acquires the operator ID (PLMN ID) and cell global ID (ECGI) of the cell (LTE-U base station) of the unlicensed band from the demodulated system information. In addition, the downlink data signal demodulation section 402 and acquiring section 405 function as the reception processing section.

The determining section 404 determines the dummy PCI used in common among LTE-U base stations. The determining section 404 is capable of determining the dummy PCI based on the assist information notified from the radio base station using the licensed band (above-mentioned Aspect 1). Further, in the case where the dummy PCI is beforehand defined in specifications, the determining section 404 determines the dummy PCI based on definition of the specifications. Information on the dummy PCI determined in the determining section 404 is output to the synchronization signal detecting section 401.

Based on the information output from the channel estimation section 403 and the like, the feedback control section 406 controls feedback of the CSI (CSI process). Further, the feedback control section 406 controls feedback of the operator ID (PLMN ID) and/or cell global ID (ECGI) acquired in the acquiring section 405. It is possible to report the operator ID (PLMN ID) and/or cell global ID (ECGI) to the radio base station of the licensed band.

As described above, in this Embodiment, the user terminal performs detection of the synchronization signal and channel estimation operation based on the dummy PCI set in common among a plurality of LTE-U base stations, and is thereby capable of acquiring the system information. By this means, as compared with operation for autonomously searching existing 504 cell IDs to identify a cell, it is possible to simplify cell identification operation, and to reduce power consumption.

As described above, the present invention is specifically described using the above-mentioned Embodiment, but it is obvious to a person skilled in the art that the invention is not limited to the Embodiment described in the Description. The invention is capable of being carried into practice as modified and changed aspects without departing from the subject matter and scope of the invention defined by the descriptions of the scope of the claims. For example, it is possible to combine a plurality of above-mentioned Aspects as appropriate to apply. Accordingly, the descriptions of the Description are intended for illustrative explanation, and do not have any restrictive meaning to the invention.

The present application is based on Japanese Patent Application No. 2014-039088 filed on February 28, 2014, entire content of which is expressly incorporated by reference herein.

## Claims

1. A user terminal for communicating with a radio base station in an unlicensed band, comprising:
a detection section that detects a synchronization signal transmitted from a radio base station using a dummy cell ID used in common among a plurality of radio base stations;
an estimation section that performs channel estimation using a reference signal; and
a reception processing section that performs reception processing of system information transmitted from a radio base station using a channel estimation result.

2. The user terminal according to claim 1, wherein the reception processing section demodulates the system information to acquire an operator ID (PLMN ID) and a cell global ID (ECGI).

3. The user terminal according to claim 1 or 2, wherein when the user terminal applies carrier aggregation or dual connectivity using the unlicensed band and a licensed band, the user terminal further has a determining section that determines the dummy cell ID based on information on the dummy cell ID notified from a cell using the licensed band.

4. The user terminal according to claim 3, wherein when a plurality of radio base stations in the same operator undergoes non-synchronized operation in the unlicensed band, the estimation section performs channel estimation of each of the radio base stations, using a reference signal allocated in the same position in a radio resource.

5. The user terminal according to claim 3, wherein when a plurality of radio base stations in the same operator undergoes synchronized operation in the unlicensed band, the estimation section performs channel estimation of each of the radio base stations, using a reference signal allocated to be capable of being orthogonal among different radio base stations in a radio resource.

6. The user terminal according to claim 4, wherein sequences of a plurality of reference signals transmitted from each of the radio base stations are generated based on the same dummy cell ID.

7. The user terminal according to claim 1, wherein when the radio base station using the unlicensed band is operated on a standalone basis, the detection section detects a synchronization signal using a dummy cell ID beforehand defined in specifications, and based on an operator ID (PLMN ID) and a cell global ID (ECGI) acquired from the system information in the reception processing section, the user terminal connects to a predetermined radio base station.

8. The user terminal according to claim 1, wherein the number of dummy cell IDs is at least less than 504, and the dummy cell IDs are set individually for each operator.

9. A radio base station for communicating with a user terminal in an unlicensed band, comprising:
a synchronization signal generating section that generates a synchronization signal based on a dummy cell ID used in common with another radio base station;
a reference signal generating section that generates a reference signal by applying the dummy cell ID to a reference signal sequence;
a system information generating section that generates system information including an operator ID (PLMN ID) and a cell global ID (ECGI); and
a transmission section that transmits the synchronization signal, the reference signal and the system information.

10. A radio communication method in a user terminal for communicating with a radio base station in an unlicensed band, comprising:
detecting a synchronization signal transmitted from a radio base station using a dummy cell ID used in common among a plurality of radio base stations;
performing channel estimation using a reference signal; and
performing reception processing of system information transmitted from a radio base station using a channel estimation result.
